Europäisches Patentamt

European Patent Office

Office européen des brevets

(11) Veröffentlichungsnummer : **0 089 474**
**B1**

(12) **EUROPÄISCHE PATENTSCHRIFT**

(45) Veröffentlichungstag der Patentschrift :
30.10.85

(21) Anmeldenummer : 83100961.8

(22) Anmeldetag : 02.02.83

(51) Int. Cl.⁴ : **B 23 Q 41/00, B 23 Q 7/14,
B 23 K 37/04, B 65 G 37/02**

(54) **Arbeitsstation innerhalb einer Transferlinie, insbesondere zum Montieren oder/und Bearbeiten von Karosserieteilen.**

(30) Priorität : 13.03.82 DE 3209222

(43) Veröffentlichungstag der Anmeldung :
28.09.83 Patentblatt 83/39

(45) Bekanntmachung des Hinweises auf die Patenterteilung : 30.10.85 Patentblatt 85/44

(84) Benannte Vertragsstaaten :
BE DE FR GB IT SE

(56) Entgegenhaltungen :
DE-B- 1 125 638
DE-B- 2 350 603
US-A- 4 256 947

(73) Patentinhaber : KUKA Schweissanlagen & Roboter GmbH
Blücherstrasse 144
D-8900 Augsburg (DE)

(72) Erfinder : Kraus, Josef
Wilhelm-Raabe-Strasse 12
D-8902 Neusäss (DE)
Erfinder : Klein, Karl-Heinz
Albrecht-Dürer-Strasse 111e
D-8900 Augsburg (DE)

(74) Vertreter : Ernicke, Hans-Dieter, Dipl.-Ing.
Schwibbogenplatz 2b
D-8900 Augsburg (DE)

**Beschreibung**

Die Erfindung bezieht sich auf eine Arbeitsstation innerhalb einer durch Verkettung von einzelnen Arbeitsmaschinen gebildeten Transferstraße, insbesondere zum Montieren oder/und Bearbeiten von Karosserieteilen, bei der längs einer Fördereinrichtung für das zu bearbeitende Werkstück mindestens ein automatisch steuerbares Handhabungsgerät angeordnet ist und die Förderung, das Festspannen und das Bearbeiten des Werkstückes im Takt erfolgt.

Im Karosserie-Rohbau werden Handhabungsgeräte, die auch als Industrieroboter bezeichnet werden, in erster Linie zum Widerstandspunktschweißen und zum Schutzgasschweißen eingesetzt. Ein wichtiges Kriterium für die Wirtschaftlichkeit dieser Handhabungsgeräte ist die Minimierung der Nebenzeiten. Ein Handhabungsgerät sollte sich möglichst über die gesamte Taktzeit im Schweißeinsatz befinden. Diese Vorstellung konnte aber bisher nicht oder in nicht ausreichendem Maße verwirklicht werden.

Bei Verwendung von Handhabungsgeräten in Transferstraßen erfolgt der Transport der Bauteile von einer Bearbeitungsstation zur anderen durch « Shuttle » genannte Fördereinrichtungen. Für das Zustellen der Bauteile sind Hubtische vorgesehen, die in solchen « Shuttle » enthalten sein können. Aus der Länge der Karosserieteile ergibt sich der Mindestabstand zwischen den einzelnen Bearbeitungsstationen und damit auch die notwendige Förderlänge für die Fördereinrichtung. Während des Förderns können bei den herkömmlichen Transferstraßen die Handhabungsgeräte nicht wirksam werden. Die für den Transport und das Zustellen der Bauteile erforderlichen Nebenzeiten liegen in der Größenordnung von 10 Sekunden.

Um diese Nebenzeiten zu verkürzen, wird durch die DE-AS 23 50 603 gelehrt, mehrere Werkstückhalter zu einer Baueinheit zusammenzufassen und diese um eine in der Transferlinie liegende Achse drehbar anzuordnen. Dadurch ist die Möglichkeit gegeben, während der gleichen Zeit das eine Werkstück zu spannen und das andere, bereits gespannte Werkstück zu bearbeiten. Es verbleibt dabei aber immer noch die Zeit, in der die Werkstückhaltereinheit um ihre Achse gedreht werden muß, um das vorbereitete Werkstück in die Bearbeitungsstellung zu bringen.

Mit der Erfindung wird hingegen die Aufgabe gestellt, eine Arbeitsstation innerhalb einer Transferlinie so zu gestalten, daß das Handhabungsgerät über die gesamte Taktzeit in Betrieb sein kann, ohne daß ein Mehraufwand im Hinblick auf das Spannen und Transportieren des zu bearbeitenden Werkstückes in Kauf genommen werden muß.

Die erfindungsgemäße Lösung dieser Aufgabe besteht darin, daß das einzelne Handhabungsgerät im Kreuzungsbereich von zwei sich schneidenden, ihm zugeordneten Transferlinien angeordnet und der Takt dieser Transferlinien zueinander so versetzt ist, daß beim Bearbeiten eines Werkstückes der einen Transferlinie der Werkstückwechsel bei der anderen Transferlinie erfolgt.

Dadurch, daß das Handhabungsgerät beiden Transferlinien zugeordnet und in deren Kreuzungsbereich angeordnet ist, bleibt es ständig im Einsatz, denn sobald die Bearbeitung des einen Werkstückes beendet ist, genügt eine einfache Schwenkung des Handhabungsgerätes zum anderen bereits vorbereiteten Werkstück, um dort die geforderte Handhabung durchzuführen. Da Handhabungsgeräte automatisch gesteuert werden und ihre Bewegungen außerordentlich rasch erfolgen, ist praktisch kein Zeitverlust mehr vorhanden.

Diese erfindungsgemäße Grundkonzeption kann nun in verschiedener Weise variiert werden. So ist es beispielsweise möglich, in zwei diagonal gegenüberliegenden Sektoren der Transferlinienkreuzung je ein Handhabungsgerät anzuordnen. Verwendet man jedoch in jedem Sektor der Transferlinienkreuzung ein Handhabungsgerät, dann ist die Möglichkeit gegeben, beispielsweise eine Karosserie beidseitig gleichzeitig zu bearbeiten.

Um einen reibungslosen Transport der Werkstücke zu gewährleisten, ist im Rahmen der Erfindung vorgesehen, daß die Fördereinrichtungen der sich kreuzenden Transferlinien über dem Boden erhöht angeordnet und im Kreuzungsbereich mit Weichen versehen sind.

Mit dem Begriff « Handhabungsgerät » sind Industrieroboter beliebiger Art bezeichnet, die verschiedene Arbeiten durchzuführen in der Lage sind, beispielsweise Montage- und Schweißarbeiten, aber auch spanabhebende Bearbeitungen oder Spannarbeiten und dgl.

Einzelheiten der Erfindung sind in der Zeichnung schematisch und beispielsweise dargestellt. Es zeigen :

Figur 1 eine Draufsicht auf eine Transferlinienkreuzung und

Figur 2 eine Vorderansicht der Anordnung gemäß Fig. 1.

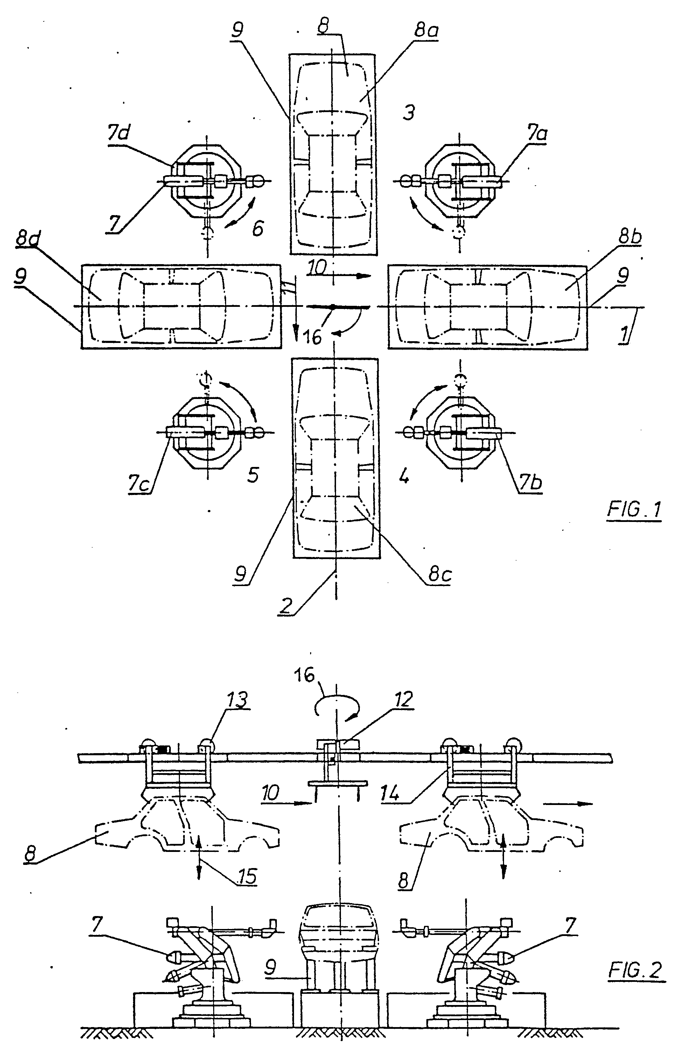

Das Ausführungsbeispiel der Fig. 1 zeigt zwei sich im rechten Winkel kreuzende Transferlinien 1, 2, von denen die Sektoren 3, 4, 5, 6 gebildet werden, in denen je ein Handhabungsgerät 7 angeordnet ist. Das Ausführungsbeispiel zeigt symbolisch einen Industrieroboter zum Ausführen von Schweißarbeiten, worauf aber die Erfindung nicht beschränkt ist.

Entlang der Transferlinien 1, 2 werden beim Beispiel Karosserieteile 8 mit Hilfe von Werkstückhaltern 9⁹ᵉ spannt. Mit den Pfeilen 10, 11 sind die zugeordneten Förderrichtungen bezeichnet.

Wie die Fig. 2 zeigt, befinden sich die Fördereinrichtungen 12 und 13 in einer höheren Ebene, wobei Transportwagen 14 und Hubeinrichtungen 15 vorgesehen sind, um die Karosserieteile 8 in die Bearbeitungsstellung abzusenken, bzw. anzuheben. Mit 16 ist symbolisch eine Weiche bezeichnet, die um eine vertikale Achse drehbar angeordnet ist und das Kreuzen der jeweiligen Fördereinrichtungen 12, 13 gestattet. Wie der Fig. 1 entnommen werden kann, ist das Handhabungsgerät 7a für die Bearbeitung der Karosserien 8a und 8b bestimmt. Demgemäß ist das diagonal gegenüberliegende Handhabungsgerät 7c den Karosserieteilen 8c und 8d zugeordnet. Für die restlichen Handhabungsgeräte 7b und 7d ergeben sich die anderen Zuordnungen.

Nach der Erfindung sind sämtliche Handhabungsgeräte 7a bis 7d ständig im Einsatz. Beim Beispiel der Fig. 1 ist mit ausgezogenen Linien angedeutet, daß diese Handhabungsgeräte gleichsinnig in horizontaler Richtung (bezogen auf die Zeichenebene) wirken. Demgemäß werden die Karosserieteile 8a und 8c beidseitig bearbeitet. In dieser Zeit können die Karosserieteile 8b und 8d entlang ihrer Transferstraße 1 in Richtung des Pfeiles 10 bewegt werden, um zur nächsten Bearbeitungsstation zu gelangen. Nach beendigung der Arbeiten an den Karosserieteilen 8a, 8c schwenken die Handhabungsgeräte 7a bis 7d in die in Zeichenebene Vertikalstellung in Pfeilrichtung, was außerordentlich rasch vonstatten gehen kann. Zuvor waren die Karosserieteile 8b und 8d in die Bearbeitungsstellung gebracht worden. Während deren Bearbeitung können nun die Karosserieteile 8a und 8c entlang der Richtung des Pfeiles 11 weitergefördert werden.

Es ist leicht einzusehen, daß die erfindungsgemäße Konzeption auch wesentlich vereinfacht werden kann, beispielsweise dadurch, daß ein einziges Handhabungsgerät in einem der Sektoren 3 bis 6 angeordnet ist. Auch die Aufstellung von zwei Handhabungsgeräten diagonal gegenüberliegend bietet die Möglichkeit, den Vorteil der Erfindung wirksam auszunutzen. Die Erfindung ist daher nicht auf die Gestaltung der Fig. 1 beschränkt.

### Stückliste

1 Transferlinie
2 Transferlinie
3 Sektor
4 Sektor
5 Sektor
6 Sektor
7 Handhabungsgerät
8 Karosserie
9 Werstückhalter
10 Förderrichtung
11 Förderrichtung
12 Fördereinrichtung
13 Fördereinrichtung
14 Transportwagen
15 Hubrichtung
16 Weiche

### Patentansprüche

1. Arbeitsstation in einer durch Verkettung von einzelnen Arbeitsmaschinen gebildeten Transferstraße, insbesondere zum Montieren oder/und Bearbeiten von Karosserieteilen, bei der längs einer Fördereinrichtung für das zu bearbeitende Werkstück mindestens ein automatisches steuerbares Handhabungsgerät zur Bearbeitung der Werkstücke angeordnet ist, und die Förderung, das Festspannen und das Bearbeiten des Werkstückes im Takt erfolgt, dadurch gekennzeichnet, daß das einzelne Handhabungsgerät (7) im Kreuzungsbereich von zwei sich schneidenden, ihm zugeordneten Transferlinien (1, 2) je einer Transferstraße angeordnet, und der Takt dieser Transferlinien (1, 2) zueinander so versetzt ist, daß beim Bearbeiten eines Werkstückes (8) der einen Transferlinie (1) der Werkstückwechsel bei der anderen Transferlinie (2) erfolgt.

2. Arbeitsstation nach Anspruch 1, dadurch gekennzeichnet, daß in zwei diagonal gegenüberliegenden Sektoren (3, 5) der Transferlinienkreuzung je ein Handhabungsgerät (7a, 7c) angeordnet ist.

3. Arbeitsstation nach Anspruch 1, dadurch gekennzeichnet, daß in jedem Sektor (3 bis 6) der Transferlinienkreuzung ein Handhabungsgerät (7a bis 7d) angeordnet ist.

4. Arbeitsstation nach Anspruch 1 oder einem der folgenden, dadurch gekennzeichnet, daß als Handhabungsgeräte (7) Industrieroboter zur Durchführung von Montage-, Schweiß- und dgl.-arbeiten eingesetzt sind.

5. Arbeitsstation nach Anspruch 1 oder einem der folgenden, dadurch gekennzeichnet, daß die Fördereinrichtungen (12, 13) der sich kreuzenden Transferlinien (1, 2) über dem Boden erhöht angeordnet und im Kreuzungsbereich mit Weichen (16) versehen sind.

### Claims

1. Working station in a transfer path formed by linking individual machines, more particularly for assembling and/or machining chassis parts, in which at least one handling device which can be controlled automatically is arranged for machining the work piece alongside a conveying installation for the work piece to be machined, and the conveying, clamping and machining of the work piece occurs in timed sequence, characterised in that the single handling device (7) is arranged in the area of intersection of two intersecting transfer lines (1, 2) associated with the said handling device in the case of each transfer path, and the timing of the said transfer lines (1, 2) with respect to one another is staggered such that whilst a work piece (8) is being machined on one transfer line (1), the work piece is being changed on the other transfer line (2).

2. Working station according to claim 1, characterised in that one handling device (7a, 7c) is arranged in two diagonally oppositely disposed sectors (3, 5) of the intersection of the transfer lines.

3. Working station according to claim 1, characterised in that one handling device (7a to 7d) is arranged in each sector (3 to 6) of the intersection of the transfer lines.

4. Working station according to claim 1 or any one of the following, characterised in that industrial robots are used as the handling devices (7) for carrying out the assembly and welding processes and the like.

5. Working station according to claim 1 or any one of the following, characterised in that the conveying installations (12, 13) of the intersecting transfer lines (1, 2) are arranged raised above the floor and are provided in the area of intersection with switching points (16).

## Revendications

1. Poste de travail dans une chaîne de transfert formée par enchaînement de différentes machines, en particulier pour assembler et/ou traiter des pièces de carrosserie, où au moins un manipulateur à commande automatique pour le travail des pièces est installé le long d'un dispositif de transport pour la pièce à traiter et où le transport, le blocage et le travail de la pièce s'opèrent en cadence, caractérisé en ce que le manipulateur (7) est installé dans la zone de croisement de deux voies de transfert (1, 2) associées à lui et qui se coupent, appartenant chacune à une chaîne de transfert, et les cadences de ces voies de transfert (1, 2) sont mutuellement décalées de manière que, pendant le travail d'une pièce (8) de l'une des voies (1), un changement de pièce s'effectuera sur l'autre voie de transfert (2).

2. Poste de travail selon la revendication 1, caractérisé en ce qu'un manipulateur (7a, 7c) est installé dans deux secteurs (3, 5) diagonalement opposés du croisement des voies de transfert.

3. Poste de travail selon la revendication 1, caractérisé en ce qu'un manipulateur (7a à 7d) est installé dans chacun des secteurs (3 à 6) du croisement des voies de transfert.

4. Poste de travail selon la revendication 1 ou une des revendications suivantes, caractérisé en ce que les manipulateurs (7) utilisés sont des robots industriels pour l'exécution de travaux d'assemblage, de soudage ou analogues.

5. Poste de travail selon la revendication 1 ou une des revendications suivantes, caractérisé en ce que les dispositifs de transport (12, 13) des voies de transfert (1, 2) qui se croisent sont installés en hauteur au-dessus du sol et sont pourvus d'aiguillages (16) dans la zone de croisement.

FIG.1

FIG.2

1